# EUROPÄISCHE PATENTSCHRIFT

(11) **EP 3 858 670 B1**
(45) Veröffentlichungstag und Bekanntmachung des Hinweises auf die Patenterteilung: **02.08.2023**
(21) Anmeldenummer: 20155127.2
(22) Anmeldetag: 03.02.2020
(51) Int. Cl.: B60Q 1/14, E01C 19/48

(54) **BAUMASCHINE MIT BELEUCHTUNGSANORDNUNG**
CONSTRUCTION MACHINE WITH LIGHTING ARRANGEMENT
MACHINE DE CONSTRUCTION POURVUE DE DISPOSITIF D'ÉCLAIRAGE

(43) Veröffentlichungstag der Anmeldung: 04.08.2021
(73) Patentinhaber: Joseph Vögele AG, 67067 Ludwigshafen (DE)
(72) Erfinder: ERDTMANN, Bernhard, 68535 Edingen Neckarhausen (DE)
(74) Vertreter: Grünecker Patent- und Rechtsanwälte PartG mbB

(56) Entgegenhaltungen:
- EP-A1- 2 578 748
- EP-A1- 3 214 223
- EP-A2- 2 698 473
- WO-A1-2019/009349

## Beschreibung

Die Erfindung bezieht sich auf eine Baumaschine als Straßenfertiger oder Beschickerfahrzeug mit einer Beleuchtungsanordnung gemäß dem Oberbegriff des Anspruchs 1.

Ein Straßenfertiger zum Herstellen einer Einbauschicht aus einem Einbaumaterial sowie ein Beschickerfahrzeug zum Beliefern des Straßenfertigers mit einem zu verbauenden Einbaumaterial umfassen jeweils einen Gutbunker, um darin ein Einbaumaterial für deren Betrieb zu bevorraten. Die jeweiligen Gutbunker der vorgenannten selbstfahrenden Straßenbaumaschinen werden auf der Baustelle von LKWs mit dem Einbaumaterial beliefert. Das gelieferte Einbaumaterial wird von den LKWs in die jeweiligen Gutbunker geschüttet. Wie in der EP 3 431 659 A1 offenbart, besitzen der Straßenfertiger oder das Beschickerfahrzeug für den Materialübergabevorgang vorderhalb ihres jeweiligen Gutbunkers eine Schubeinrichtung, an welcher ein LKW mit seinen Hinterreifen rückwärts andockt.

Typischerweise befindet sich eine Bedienperson während des Einbaus in einem auf dem Stra-ßenfertiger oder Beschickerfahrzeug vorgesehenen Führerstand. Dort ist ein Hauptbedienstand mit Bedienelementen zum Steuern der Arbeitskomponenten der Baumaschine vorgesehen. Auch die Fahrfunktion und nebengeordnete Funktionen, wie zum Beispiel eine Beleuchtung, lassen sich von dem Führerstand aus steuern. Es ist bekannt aus der EP 3 214 223 B1, dass am Straßenfertiger eine seitlich an dem Chassis oder dem Gutbunker vorgesehene Bedieneinheit mit sekundären Bedienelementen vorgesehen ist. Die Mehrzahl von sekundären Bedienelementen kann ein Beleuchtungs-Bedienelement umfassen, das zum Einschalten und/oder Ausschalten zumindest eines Teils einer Beleuchtung des Straßenfertigers betätigbar ist. Wenn die Beleuchtung des Stra-ßenfertigers mehrere Beleuchtungselemente umfasst, kann eine Konfigurationsvorrichtung vorgesehen sein, mittels derer eingestellt werden kann, welche Beleuchtungselemente durch eine Betätigung des Beleuchtungs-Bedienelements einschaltbar und/oder ausschaltbar sind. So kann das Beleuchtungs-Bedienelement den Vorlieben eines bestimmten Benutzers oder den speziellen Erfordernissen einer bestimmten Baustelle angepasst werden.

WO 2019/009349 A1 betrifft eine Objekterfassungsvorrichtung zum Erfassen eines Objekts in der Umgebung eines Asphaltfertigers. EP 2 698 473 A2 offenbart eine selbstfahrende Straßenbaumaschine mit einer lichttechnischen Anlage an der Frontseite und/oder Heckseite. EP 2 578 748 A1 offenbart einen Außensteuerstand für eine Baumaschine mit Hilfsleuchten.

Für einen LKW, der auf einer Nachtbaustelle zum Beliefern der Baumaschine, also des Straßenfertigers oder des Beschickerfahrzeugs, mit Einbaugut eingesetzt wird, kann sich die Beleuchtung als problematisch erweisen, da diese auf die Rückspiegel des LKWs treffen und den Fahrer blenden kann, während dieser zurücksetzt, um an der Baumaschine anzudocken.

Aufgabe der vorliegenden Erfindung ist es, eine im Hinblick der Bedienerfreundlichkeit verbesserte Baumaschine in Form eines Straßenfertigers oder Beschickerfahrzeugs zur Verfügung zu stellen, um den obengenannten Nachteil zu beseitigen.

Diese Aufgabe wird gelöst durch eine Baumaschine mit den Merkmalen des Anspruchs 1 oder durch ein Verfahren zum Betreiben einer Beleuchtungsanordnung einer Baumaschine mit den Merkmalen des Anspruchs 9.

Vorteilhafte Weiterbildungen der Erfindung sind in den Unteransprüchen angegeben.

Eine erfindungsgemäße Baumaschine in Form eines Straßenfertigers oder Beschickerfahrzeugs umfasst ein Chassis und einen Gutbunker, wobei auf dem Chassis mindestens eine Beleuchtungsanordnung direkt oder indirekt angebracht ist. Die Beleuchtungsanordnung weist mindestens eine Lichtquelle auf. Die Beleuchtungsanordnung ist zum Beleuchten eines Bereichs in Fahrtrichtung vor der Baumaschine konfiguriert. Die Baumaschine weist ein Objekterkennungssystem auf zum Erkennen eines in Fahrtrichtung vor der Baumaschine befindlichen Objekts, wobei die von der Beleuchtungsanordnung abgestrahlte Beleuchtung in Abhängigkeit von einem Erkennen eines Objekts mittels des Objekterkennungssystems veränderbar ist, wobei die Beleuchtungsanordnung eine erste Lichtquelle für einen Nahbereich in Fahrtrichtung vor der Baumaschine und eine zweite Lichtquelle für einen Fernbereich in Fahrtrichtung vor der Baumaschine aufweist, wobei die von der ersten und zweiten Lichtquelle abgestrahlte Beleuchtung in Abhängigkeit von einem Erkennen eines Objekts mittels des Objekterkennungssystems selektiv veränderbar ist. Dadurch werden die Anfahrt des LKWs und das Andocken an der Baumaschine bedienerfreundlicher, da der LKW-Fahrer weniger geblendet wird und sich besser und einfacher orientieren kann. Dies reduziert den Aufwand beim Zurücksetzen des LKWs in Richtung der Baumaschine und beim Andocken des LKWs an der Baumaschine für den Fahrer des LKWs. Die selektive Veränderung der von der ersten und zweiten Lichtquelle abgestrahlten Beleuchtung in Abhängigkeit von einem Erkennen eines Objekts ermöglicht z. B. eine selektive Abschaltung der Lichtquelle für den Fernbereich, wenn der LKW nachts rückwärts in die Richtung der Baumaschine angefahren und an der Baumaschine angedockt wird, wobei die Lichtquelle für den Nahbereich für die Sichtbarkeit der Nahumgebung der Baustelle eingeschaltet bleibt.

In einer effizienten Aufführungsvariante ist die von der Beleuchtungsanordnung abgestrahlte Beleuchtung in Abhängigkeit von einem Erkennen eines Objekts mittels des Objekterkennungssystems automatisch veränderbar. Dies beseitigt den Schritt des manuellen Abschaltens für den Bediener der Baumaschine beim Zurücksetzen des LKWs in Richtung der Baumaschine und verringert dadurch den Aufwand

Vorzugsweise ist die von der Lichtquelle abgestrahlte Beleuchtung dimmbar. Dies verringert das Blenden, ermöglicht aber dennoch das Bereitstellen von genügend Licht für die Sichtbarkeit der Umgebung der Baustelle in der Dunkelheit, was für den Fahrer der Baumaschine selbst sowie für die übrigen Bauarbeiten hilfreich ist.

In einer bevorzugten Ausführungsvariante ist die von der Lichtquelle abgestrahlte Beleuchtung abschaltbar. Dies ermöglicht dem Fahrer des LKWs ein vollkommen blendfreies Rückwärtsfahren.

In einer alternativen Ausführungsvariante ist die Lichtquelle in eine von der Fahrtrichtung abweichende Richtung drehbar. Dies ermöglicht dem Fahrer des LKWs ein blendfreies Rückwärtsfahren.

Zweckmäßig kann es sein, wenn die Beleuchtungsanordnung eine relativ zur Lichtquelle bewegliche Abdeckung aufweist und die Lichtquelle mittels der Abdeckung zumindest teilweise abdeckbar ist. Dies ermöglicht dem Fahrer des LKWs ein blendfreies Rückwärtsfahren.

Die Erfindung bezieht sich auch auf ein Verfahren zum Betreiben einer Beleuchtungsanordnung einer Baumaschine in Form eines Straßenfertigers oder Beschickerfahrzeugs, wobei die Baumaschine ein Chassis aufweist, wobei auf dem Chassis mindestens eine Beleuchtungsanordnung angebracht ist, wobei die Beleuchtungsanordnung mindestens eine Lichtquelle aufweist, und wobei die Beleuchtungsanordnung konfiguriert ist zum Beleuchten eines Bereichs in Fahrtrichtung vor der Baumaschine. Die Baumaschine weist ein Objekterkennungssystem zum Erkennen eines in Fahrtrichtung vor der Baumaschine befindlichen Objekts auf, wobei, wenn ein Objekt mittels des Objekterkennungssystems erkannt wird, die von der Beleuchtungsanordnung abgestrahlte Beleuchtung in Abhängigkeit von einem Erkennen eines Objekts automatisch verändert wird. Dies verbessert, wie oben ausgeführt, die Orientierung des LKW-Fahrers und vereinfacht die Anfahrt des LKWs und das Andocken an der Baumaschine, die Beleuchtungsanordnung eine erste Lichtquelle für einen Nahbereich in Fahrtrichtung vor der Baumaschine und eine zweite Lichtquelle für einen Fernbereich in Fahrtrichtung vor der Baumaschine aufweist, wobei die von der ersten und zweiten Lichtquelle abgestrahlte Beleuchtung in Abhängigkeit von einem Erkennen eines Objekts mittels des Objekterkennungssystems selektiv verändert wird. Die selektive Veränderung der von der ersten und zweiten Lichtquelle abgestrahlte Beleuchtung in Abhängigkeit von einem Erkennen eines Objekts ermöglicht z. B. eine selektive Abschaltung der Lichtquelle für den Fernbereich, wenn der LKW nachts rückwärts in die Richtung der Baumaschine angefahren und an der Baumaschine angedockt wird, wobei die Lichtquelle für den Nahbereich für die Sichtbarkeit der Nahumgebung der Baustelle eingeschaltet bleibt.

In einer effizienten Ausführungsvariante sieht das erfindungsgemäße Verfahren vor, dass die von der Beleuchtungsanordnung abgestrahlte Beleuchtung in Abhängigkeit von einem Erkennen eines Objekts mittels des Objekterkennungssystems automatisch verändert wird. Dies beseitigt den Schritt des manuellen Abschaltens für den Bediener der Baumaschine beim Zurücksetzen des LKWs in Richtung der Baumaschine und verringert seinen Aufwand. In einer vorteilhaften Ausführungsvariante sieht das erfindungsgemäße Verfahren vor, dass die von der Lichtquelle abgestrahlte Beleuchtung gedimmt wird, wenn ein Objekt erkannt wurde. Dies verringert das Blenden, ermöglicht jedoch das Bereitstellen von genügend Licht für die Sichtbarkeit der Umgebung der Baustelle in der Dunkelheit, was für die anderen Bauarbeiten hilfreich ist.

In einer weiteren vorteilhaften Ausführungsvariante sieht das erfindungsgemäßen Verfahren vor, dass die von der Lichtquelle abstrahlende Beleuchtung abgeschaltet wird, wenn ein Objekt erkannt wurde. Dies ermöglicht dem Fahrer des LKWs ein blendfreies Rückwärtsfahren.

In einer alternativen Ausführungsvariante sieht das erfindungsgemäßen Verfahren vor, dass die Lichtquelle in eine von der Fahrtrichtung abweichende Richtung gedreht wird. Dies ermöglicht dem Fahrer des LKWs ein blendfreies Rückwärtsfahren.

In einer alternativen Ausführungsvariante sieht das erfindungsgemäßen Verfahren vor, dass die Beleuchtungsanordnung eine Abdeckung aufweist und die Lichtquelle mittels der Abdeckung zumindest teilweise abgedeckt wird. Dies ermöglicht dem Fahrer des LKWs ein blendfreies Rückwärtsfahren.

Im Folgenden werden Ausführungsbeispiele der Erfindung anhand der Figuren näher beschrieben.

Dabei zeigen
- Fig. 1: eine schematische Darstellung einer Baumaschine in Form eines Straßenfertigers;
- Fig. 2: eine schematische Darstellung einer Baumaschine in Form eines Beschickerfahrzeugs;
- Fig. 3: eine Lichtquelle der Baumaschine mit einer Abdeckung; und
- Fig. 4: eine drehbar gelagerte Beleuchtungsanordnung.

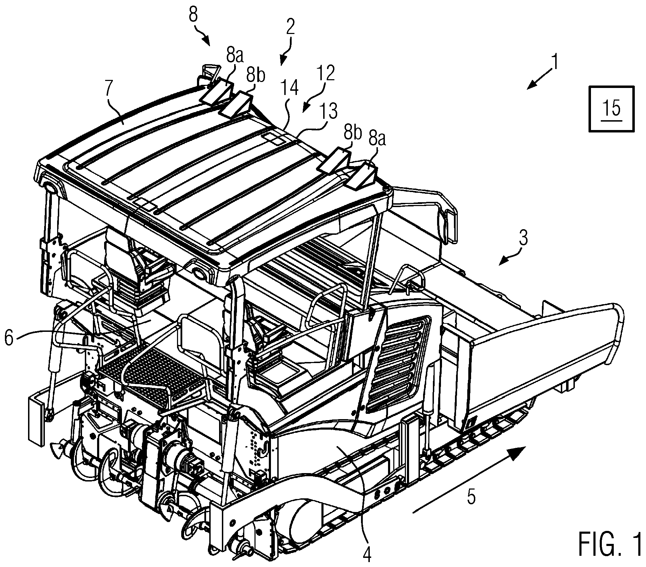

Figur 1 zeigt eine Baumaschine 1 in Form eines Straßenfertigers 2 zum Herstellen einer Einbauschicht. Der Straßenfertiger 2 umfasst einen Gutbunker 3, in welchem ein Einbaumaterial zum Herstellen der Einbauschicht bevorratet ist. Der Gutbunker 3 ist auf einem Chassis 4 des Stra-ßenfertigers 2 in Fahrrichtung 5 betrachtet vorne angeordnet. Der Straßenfertiger 2 umfasst ferner einen Bedienstand 6, von wo aus ein Bediener den Straßenfertiger 2 steuern kann. In Fahrtrichtung 5 betrachtet hinten am Straßenfertiger 2 ist eine bewegbare Einbaubohle (nicht gezeigt) angeordnet, mittels welcher der Straßenfertiger 2 das Einbaumaterial zur neuen Einbauschicht verarbeitet. Dafür wird das vorne im Gutbunker 3 bevorratete Einbaumaterial entgegen der Fahrtrichtung 5 mittels einer nicht gezeigten Längsfördervorrichtung nach hinten transportiert, vor der Einbaubohle ausgebreitet und schließlich von der Einbaubohle zur neuen Einbauschicht verdichtet.

Auf dem Chassis 4 des Straßenfertigers 2 ist ein Führerstand 6 vorgesehen, der einen Arbeitsplatz für eine Bedienperson des Straßenfertigers 2 umfasst. Der Führerstand 6 kann zum Schutz der Bedienperson vor Witterungseinflüssen oder herabfallenden Gegenständen ein Dach 7 umfassen.

Der Straßenfertiger 2 weist eine Beleuchtungsanordnung 8 auf, die wenigstens eine Lichtquelle 8a, 8b umfasst. Die Beleuchtungsanordnung 8 ist bei der in Fig. 1 gezeigten Ausführungsfrom auf dem Dach 7 (und somit indirekt am Chassis 4) angebracht. Es ist auch möglich, die Beleuchtungsanordnung 8 an anderen Stellen des Straßenfertigers 2 anzubringen. Die Lichtquelle 8a, 8b kann ein Scheinwerfer sein. Insbesondere kann die Beleuchtungsanordnung 8 eine Fernbereichlichtquelle 8a zum Beleuchten eines Fernbereichs der Umgebung des Straßenfertigers 2 aufweisen. Zudem kann eine Nahbereichlichtquelle 8b zum Beleuchten eines Nahbereichs der Umgebung des Straßenfertigers 2 vorgesehen sein. Die Fern- und Nahbereichlichtquellen 8a, 8b können insbesondere einen Frontbereich in Fahrtrichtung 5 vor dem Straßenfertiger 2 beleuchten, um die Straßenbauarbeit bei Dunkelheit zu erleichtern.

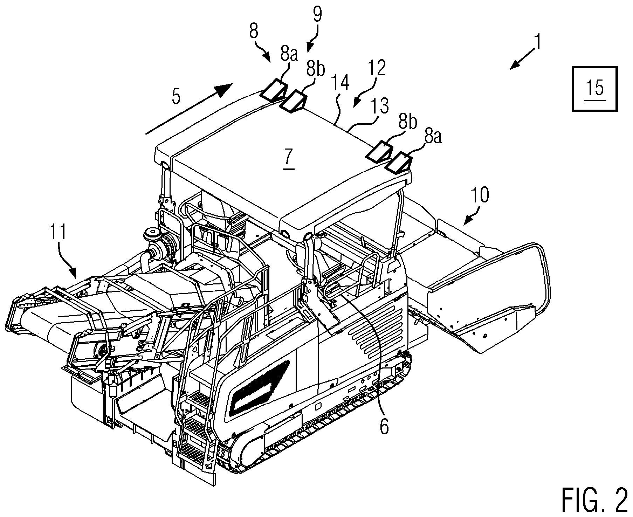

Figur 2 zeigt als Baumaschine 1 ein Beschickerfahrzeug 9 zum Beliefern eines Straßenfertigers 2 gemäß Figur 1. Das Beschickerfahrzeug 9 hat einen Gutbunker 10 zur Bevorratung des Einbaumaterials. Der Gutbunker 3 ist auf einem Chassis 4 des Beschickerfahrzeugs 2 in Fahrrichtung 5 betrachtet vorne angeordnet. Das Beschickerfahrzeug 9 verfügt ferner über eine Materialfördervorrichtung 11, die dazu ausgebildet ist, das Einbaumaterial aus dem Gutbunker 10 aufzunehmen und es zum Einbau an einen Straßenfertiger 2 gemäß Figur 1 zu übergeben. Dafür fährt das Beschickerfahrzeug 9 vor dem Straßenfertiger 2 her, während das Einbaumaterial von der Materialfördervorrichtung 11 in den Gutbunker 10 des Straßenfertigers 1 gefördert wird.

Auf dem Chassis 4 des Beschickerfahrzeugs 2 ist ein Führerstand 6 vorgesehen, der einen Arbeitsplatz für eine Bedienperson des Beschickerfahrzeugs 2 umfasst. Der Führerstand 6 kann zum Schutz der Bedienperson vor Witterungseinflüssen oder herabfallenden Gegenständen ein Dach 7 umfassen.

Das Beschickerfahrzeug 9 weist eine Beleuchtungsanordnung 8 auf, die wenigstens eine Lichtquelle 8a, 8b umfasst. Die Lichtquelle 8a, 8b kann ein Scheinwerfer sein. Insbesondere kann die Beleuchtungsanordnung 8 eine Fernbereichlichtquelle 8a zum Beleuchten eines Fernbereichs der Umgebung des Beschickerfahrzeugs 9 aufweisen. Zudem kann eine Nahbereichlichtquelle 8b zum Beleuchten eines Nahbereichs der Umgebung des Beschickerfahrzeugs 9 vorgesehen sein. Die Fern- und Nahbereichlichtquellen 8a, 8b können insbesondere einen Frontbereich in Fahrtrichtung 5 vor dem Beschickerfahrzeug 9 beleuchten, um die Straßenbauarbeiten bei Dunkelheit zu erleichtern.

Wie in den Figuren 1 und 2 gezeigt, weisen der Straßenfertiger 2 bzw. das Beschickerfahrzeug 9 ein Objekterkennungssystem 12 auf. Das Objekterkennungssystem 12 kann eine Kamera 13 und/oder eine Sensoranordnung 14 aufweisen für das Erkennen eines Objekts 15. Die Sensoranordnung 14 kann akustische Ultraschallsensoren, und/oder Radarsensoren, und/oder Infrarotsensoren und/oder Lidarsensoren aufweisen. Die Kamera 13 oder die Sensoranordnung 14 können ein Objekt 15 im Bereich vor der Baumaschine 1 erfassen und bei Erkennung des Objekts 15 und in Abhängigkeit von dessen Größe ein Signal erzeugen. Die Erkennung des Objekts 15 in Form eines LKWs kann in Abhängigkeit von der Größe des Objekts 15 durchgeführt werden. Die Sensoren können in der Lage sein, die Größe des Objekts 15 zu erfassen. Die Erkennung des Objekts 15 in Form eines LKWs kann auch durch Bildbearbeitung der durch die Kamera erfassten Bilder erfolgen. Ein Rechner (nicht gezeigt) kann das Signal der Kamera 13 oder der Sensoranordnung 14 empfangen und verarbeiten. Der Rechner kann weiterhin das verarbeitete Signal an die Beleuchtungsanordnung 8 übertragen für ein automatisches Ausschalten oder Dimmen der von der Beleuchtungsanordnung 8, insbesondere von der Fernbereichlichtquelle 8b, abgestrahlten Beleuchtung. Es ist auch möglich, dass das verarbeitete Signal an eine nicht gezeigten Lautsprecheranlage übertragen werden kann. Die Lautsprecheranlage kann dann das verarbeitete Signal vom Rechner empfangen und es akustisch mittels eines Audiosystems übertragen. Anschließend kann der Bediener die von der Lichtquelle 8, insbesondere von der Fernbereichlichtquelle 8b, abgestrahlte Beleuchtung manuell dimmen oder abschalten.

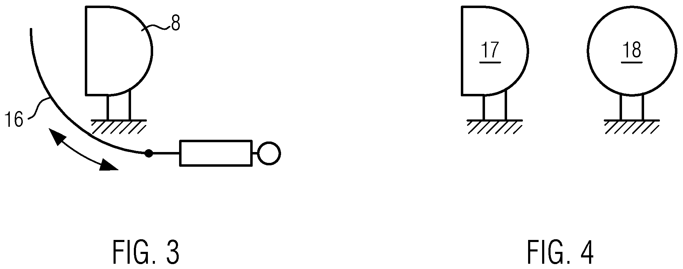

Fig. 3 zeigt eine Variante der Beleuchtungsanordnung 8, die eine relativ zur Lichtquelle 8a, 8b bewegliche Abdeckung 16 aufweist. Die Abdeckung kann die Lichtquelle 8a, 8b teilweise oder komplett abdecken. Wenn mittels des Objekterkennungssystems 12 ein Objekt 15 erkannt wird, kann die Abdeckung 16 ggf. automatisch in eine derartige Position verfahren werden, dass ein Blenden eines LKW-Fahrers vermieden wird.

Die Beleuchtungsanordnung 8 kann auch drehbar gelagert sein. Dies ist in Fig. 4 dargestellt. Die in Fahrtrichtung 5 des Beschickerfahrzeugs 9 oder des Straßenfertigers 2 gedrehte Position der Beleuchtungsanordnung 8 ist mit "17" bezeichnet. Die von der Fahrtrichtung 5 des Beschickerfahrzeugs 9 oder des Straßenfertigers 2 weggedrehte Position der Beleuchtungsanordnung 8 ist mit "18" bezeichnet.

## Patentansprüche

1. Baumaschine (1) als Straßenfertiger (2) oder Beschickerfahrzeug (9), jeweils mit einem Chassis (4) und einem Gutbunker (3, 10), wobei auf dem Chassis (4) mindestens eine Beleuchtungsanordnung (8) angebracht ist, wobei die Beleuchtungsanordnung (8) mindestens eine Lichtquelle (8a, 8b) aufweist, und wobei die Beleuchtungsanordnung (8) konfiguriert ist zum Beleuchten eines Bereichs in Fahrtrichtung vor der Baumaschine (1), **dadurch gekennzeichnet, dass**
die Baumaschine (1) ein Objekterkennungssystem (12) zum Erkennen eines in Fahrtrichtung vor der Baumaschine (1) befindlichen Objekts (15) aufweist, und die von der Beleuchtungsanordnung (8) abgestrahlte Beleuchtung in Abhängigkeit von einem Erkennen eines Objekts (15) mittels des Objekterkennungssystems (12) veränderbar ist,
wobei die Beleuchtungsanordnung (8) eine erste Lichtquelle (8a) für einen Nahbereich in Fahrtrichtung vor der Baumaschine (1) und eine zweite Lichtquelle (8b) für einen Fernbereich in Fahrtrichtung vor der Baumaschine (1) aufweist, wobei die von der ersten und zweiten Lichtquelle (8a, 8b) abgestrahlte Beleuchtung in Abhängigkeit von einem Erkennen eines Objekts (15) mittels des Objekterkennungssystems (12) selektiv veränderbar ist.

2. Baumaschine nach Anspruch 1, **dadurch gekennzeichnet, dass** die von der Beleuchtungsanordnung (8) abgestrahlte Beleuchtung (8a, 8b) in Abhängigkeit von einem Erkennen eines Objekts (15) mittels des Objekterkennungssystem (12) automatisch veränderbar ist.

3. Baumaschine nach Anspruch 1 oder 2, **dadurch gekennzeichnet, dass** die von der Lichtquelle (8a, 8b) abgestrahlte Beleuchtung dimmbar ist.

4. Baumaschine nach einem der vorangehenden Ansprüche, **dadurch gekennzeichnet, dass** die von der Lichtquelle (8a, 8b) abgestrahlte Beleuchtung abschaltbar ist.

5. Baumaschine nach einem der vorangehenden Ansprüche, **dadurch gekennzeichnet, dass** die Lichtquelle (8a, 8b) in eine von der Fahrtrichtung abweichende Richtung drehbar ist.

6. Baumaschine nach einem der vorangehenden Ansprüche, **dadurch gekennzeichnet, dass** die Beleuchtungsanordnung (8) eine relativ zur Lichtquelle (8a, 8b) bewegliche Abdeckung (16) aufweist und die Lichtquelle (8a, 8b) mittels der Abdeckung (16) zumindest teilweise abdeckbar ist.

7. Baumaschine nach einem der vorangehenden Ansprüche, **dadurch gekennzeichnet, dass** das Objekterkennungssystem (12) eine Kamera (13) und/oder eine Sensoranordnung (14) aufweist, wobei die Kamera (13) und/oder die Sensoranordnung (14) dazu konfiguriert ist, das Objekt (15) im Bereich vor der Baumaschine (1) zu erfassen und bei Erkennung des Objekts (15) in Abhängigkeit von dessen Größe ein Signal zu erzeugen.

8. Baumaschine nach Anspruch 7, **dadurch gekennzeichnet, dass** ein Rechner dazu konfiguriert ist, das Signal der Kamera (13) und/oderoder der Sensoranordnung (14) zu empfangen und zu verarbeiten und das verarbeitete Signal an die Beleuchtungsanordnung (8) zu übertragen für ein automatisches Ausschalten oder Dimmen der von der Beleuchtungsanordnung (8) abgestrahlten Beleuchtung.

9. Verfahren zum Betreiben einer Beleuchtungsanordnung (8) einer Baumaschine (1), die als Straßenfertiger (2) oder Beschickerfahrzeug (9) ausgeführt ist, wobei die Baumaschine (1) ein Chassis (4) und einen Gutbunker (3, 10) aufweist, wobei auf dem Chassis (4) mindestens eine Beleuchtungsanordnung (8) angebracht ist, wobei die Beleuchtungsanordnung (8) mindestens eine Lichtquelle (8a, 8b) aufweist, und wobei die Beleuchtungsanordnung (8) konfiguriert ist zum Beleuchten eines Bereichs in Fahrtrichtung vor der Baumaschine (1),
**dadurch gekennzeichnet, dass**
die Baumaschine (1) ein Objekterkennungssystem (12) zum Erkennen eines in Fahrtrichtung vor der Baumaschine (1) befindlichen Objekts (15) aufweist, ein Objekt (15) mittels des Objekterkennungssystems (12) erkannt wird und die von der Beleuchtungsanordnung (8) abgestrahlte Beleuchtung in Abhängigkeit von einem Erkennen eines Objekts (15) verändert wird,
wobei die Beleuchtungsanordnung (8) eine erste Lichtquelle (8a) für einen Nahbereich in Fahrtrichtung vor der Baumaschine (1) und eine zweite Lichtquelle (8b) für einen Fernbereich in Fahrtrichtung vor der Baumaschine (1) aufweist, wobei die von der ersten und zweiten Lichtquelle (8a, 8b) abgestrahlte Beleuchtung in Abhängigkeit von einem Erkennen eines Objekts mittels des Objekterkennungssystems (12) selektiv verändert wird.

10. Verfahren nach Anspruch 9, **dadurch gekennzeichnet, dass** die von der Beleuchtungsanordnung (8) abgestrahlte Beleuchtung in Abhängigkeit von einem Erkennen eines Objekts (15) automatisch verändert wird.

11. Verfahren nach Anspruch 9 oder 10, **dadurch gekennzeichnet, dass** die von der Lichtquelle (8a, 8b) abgestrahlte Beleuchtung gedimmt wird.

12. Verfahren nach einem der Ansprüche 9 bis 11, **dadurch gekennzeichnet, dass** die von der Lichtquelle (8a, 8b) abstrahlende Beleuchtung abgeschaltet wird.

13. Verfahren nach einem der Ansprüche 9 bis 12, **dadurch gekennzeichnet, dass** die Lichtquelle (8a, 8b) in eine von der Fahrtrichtung abweichende Richtung gedreht wird.

14. Verfahren nach einem der Ansprüche 9 bis 13, **dadurch gekennzeichnet, dass** die Beleuchtungsanordnung (8) eine Abdeckung (16) aufweist und die Lichtquelle (8a, 8b) mittels der Abdeckung (16) zumindest teilweise abgedeckt wird.

15. Verfahren nach einem der Ansprüche 9 bis 14, **dadurch gekennzeichnet, dass** eine Kamera (13) und/oder eine Sensoranordnung (14) des Objekterkennungssystems das Objekt (15) erfasst und bei Erkennung des Objekts (15) in Abhängigkeit von dessen Größe ein Signal erzeugt wird, wobei ein Rechner das Signal empfängt und verarbeitet und das verarbeitete Signal an die Beleuchtungsanordnung (8) überträgt für ein automatisches Abschalten oder Dimmen der von der Beleuchtungsanordnung (8) abgestrahlten Beleuchtung.

## Claims

1. A construction machine (1) as a road paver (2) or feeder vehicle (9), comprising:
a chassis (4);
a hopper (3, 10);
wherein at least a lighting arrangement (8) is mounted on the chassis (4), wherein the lighting arrangement (8) comprises a light source (8a, 8b), and wherein the lighting arrangement (8) is configured to illuminate an area in front of the construction machine (1) in a direction of travel;
**characterized in that** the construction machine (1) comprises an object detection system (12) for detecting an object located in front of the construction machine (1) in the direction of travel, wherein illumination emitted by the lighting arrangement (8) can be changed by means of the object detection system (12) as a function of a detection of an object (15),
wherein the light source (8) comprises a first light source (8a) for a near range in the direction of travel in front of the construction machine (1), and the lighting arrangement (8) further comprises a second light source (8b) for a far range in the direction of travel in front of the construction machine, and wherein lighting emitted from the first and second light sources (8a, 8b) is selectively variable in dependence on a detection of an object (15) by the object detection system (12).

2. The construction machine according to claim 1, wherein the illumination emitted by the lighting arrangement (8) is automatically variable in dependence on the detection of an object (15) by means of the object detection system (12).

3. The construction machine according to claim 1 or claim 2, wherein the illumination emitted by the lighting arrangement (8a, 8b) is dimmable.

4. The construction machine according to any one of the preceding claims, wherein the illumination emitted by the light source (8a, 8b) can be switched off.

5. The construction machine according to any one of the preceding claims, wherein the light source (8a, 8b) is rotatable in a direction deviating from the direction of travel.

6. The construction machine according to any one of the preceding claims, wherein the lighting arrangement (8) comprises a cover (16) movable relative to the light source (8a, 8b), and the light source (8a, 8b) can be at least partially covered by the cover (16).

7. The construction machine according to any one of the preceding claims, wherein the object detection system (12) comprises a camera (13) and/or a sensor arrangement (14), wherein the camera (13) and/or the sensor arrangement (14) is configured to detect an object (15) in the area in front of the construction machine (1) and generate a signal depending on the size of the object (15), when the object (15) is detected.

8. The construction machine according to claim 7, wherein a computer is configured to receive and process the signal from camera (13) or sensor arrangement (14), and to transmit the processed signal to the lighting arrangement (8) for automatic switching off or dimming of the illumination emitted by the lighting arrangement (8).

9. The method for operating a lighting arrangement (8) of a construction machine (1) as a road paver (2) or feeder vehicle (9), wherein the construction machine (1) has a chassis (4), a hopper (3, 10), and a lighting arrangement (8) mounted on the chassis (4), wherein the lighting arrangement (8) comprises a light source (8a, 8b), and wherein the lighting arrangement (8) is configured to illuminate an area in front of the construction machine (1) in a direction of travel, **characterized by**
detecting, by an object detection system (12) of the construction machine (1), an object (15) located in front of the construction machine (1) in the direction of travel; and
changing illumination emitted by the lighting arrangement (8) as a function of the detection of the object (15),
wherein the light source (8) comprises a first light source (8a) for a near range in the direction of travel in front of the construction machine (1), and the lighting arrangement (8) further comprises a second light source (8b) for a far range in the direction of travel in front of the construction machine (1), and wherein the method comprises the step of changing the illumination emitted by the first and second light sources (8a, 8b) in dependence on the detection of the object (15) by the object detection system (12).

10. The method according to claim 9, wherein the illumination emitted by the lighting arrangement (8) is automatically changed in dependence on the detection of the object (15).

11. The method according to claim 9 or claim 10, wherein the illumination emitted by the lighting source (8a, 8b) is dimmed.

12. The method according to any one of the claims 9 to 11, wherein the illumination emitted by the light source (8a, 8b) is switched off.

13. The method according to any one of the claims 9 to 12, wherein the light source (8a, 8b) is rotated in a direction deviating from the direction of travel.

14. The method according to any one of the claims 9 to 13, wherein the lighting arrangement (8) comprises a cover (16), and wherein the light source (8a, 8b) is at least partially covered with the cover (16).

15. The method according to any one of the claims 9 to 14, wherein the object (15) is detected by a camera (13) and/or a sensor arrangement (14) of the object detection system (12) and a signal is generated depending on the size of the object (15), when the object (15) is detected, wherein a computer receives and processes the signal and transmits the processed signal to the lighting arrangement (8) for automatic switching off or dimming of the illumination emitted by the lighting arrangement (8).

## Revendications

1. Engin de construction (1) conçu comme un finisseur de route (2) ou un alimentateur mobile (9) comportant chaque fois un châssis (4) et une trémie (3, 10), dans lequel au moins un dispositif d'éclairage (8) est monté sur le châssis (4), dans lequel le dispositif d'éclairage (8) comporte au moins une source lumineuse (8a, 8b), et dans lequel le dispositif d'éclairage (8) est configuré pour éclairer une zone devant l'engin de construction (1) dans la direction de déplacement,
**caractérisé en ce que** l'engin de construction (1) comporte un système de reconnaissance d'objet (12) pour reconnaître un objet (15) situé devant l'engin de construction (1) dans la direction de déplacement, et **en ce que** l'éclairage émis par le dispositif d'éclairage (8) peut être modifié en fonction de la reconnaissance d'un objet (15) par le système de reconnaissance d'objet (12),
dans lequel le dispositif d'éclairage (8) comporte une première source lumineuse (8a) pour une courte portée dans la direction de déplacement devant l'engin de construction (1) et une deuxième source lumineuse (8b) pour une longue portée dans la direction de déplacement devant l'engin de construction (1), dans lequel l'éclairage émis par les première et deuxième sources lumineuses (8a, 8b) peut être modifié sélectivement en fonction de la reconnaissance d'un objet (15) par le système de reconnaissance d'objet (12).

2. Engin de construction selon la revendication 1, **caractérisé en ce que** l'éclairage (8a, 8b) émis par le dispositif d'éclairage (8) peut être modifié automatiquement en fonction de la reconnaissance d'un objet (15) par le système de reconnaissance d'objet (12).

3. Engin de construction selon la revendication 1 ou 2, **caractérisé en ce que** l'éclairage émis par la source lumineuse (8a, 8b) peut être atténué.

4. Engin de construction selon l'une des revendications précédentes, **caractérisé en ce que** l'éclairage émis par la source lumineuse (8a, 8b) peut être éteint.

5. Engin de construction selon l'une des revendications précédentes, **caractérisé en ce que** la source lumineuse (8a, 8b) peut être tournée dans une direction s'écartant de la direction de déplacement.

6. Engin de construction selon l'une des revendications précédentes, **caractérisé en ce que** le dispositif d'éclairage (8) comporte un capot (16) déplaçable par rapport à la source lumineuse (8a, 8b) et **en ce que** la source lumineuse (8a, 8b) peut être au moins partiellement recouverte par le capot (16) .

7. Engin de construction selon l'une des revendications précédentes, **caractérisé en ce que** le système de reconnaissance d'objet (12) comporte une caméra (13) et/ou un dispositif de détection (14), dans lequel la caméra (13) et/ou le dispositif de détection (14) est configuré pour détecter l'objet (15) dans la zone devant l'engin de construction (1) et pour générer un signal lors de la reconnaissance de l'objet (15) en fonction de la taille de l'objet.

8. Engin de construction selon la revendication 7, **caractérisé en ce qu'**un ordinateur est configuré pour recevoir et traiter le signal de la caméra (13) et/ou du dispositif de détection (14) et pour transmettre le signal traité au dispositif d'éclairage (8) pour une extinction ou atténuation automatique de l'éclairage émis par le dispositif d'éclairage (8).

9. Procédé pour commander un dispositif d'éclairage (8) d'un engin de construction (1) conçu comme un finisseur de route (2) ou un alimentateur mobile (9), dans lequel l'engin de construction (1) comporte un châssis (4) et une trémie (3, 10), dans lequel au moins un dispositif d'éclairage (8) est monté sur le châssis (4), dans lequel le dispositif d'éclairage (8) comporte au moins une source lumineuse (8a, 8b), et dans lequel le dispositif d'éclairage (8) est configuré pour éclairer une zone devant l'engin de construction (1) dans la direction de déplacement,
**caractérisé en ce que** l'engin de construction (1) comporte un système de reconnaissance d'objet (12) pour reconnaître un objet (15) situé devant l'engin de construction (1) dans la direction de déplacement, **en ce qu'**un objet (15) est reconnu au moyen du système de reconnaissance d'objet (12), et **en ce que** l'éclairage émis par le dispositif d'éclairage (8) est modifié en fonction de la reconnaissance de l'objet (15),
dans lequel le dispositif d'éclairage (8) comporte une première source lumineuse (8a) pour une courte portée dans la direction de déplacement devant l'engin de construction (1) et une deuxième source lumineuse (8b) pour une longue portée dans la direction de déplacement devant l'engin de construction (1), dans lequel l'éclairage émis par les première et deuxième sources lumineuses (8a, 8b) peut être modifié sélectivement en fonction de la reconnaissance d'un objet par le système de reconnaissance d'objet (12).

10. Procédé selon la revendication 9, **caractérisé en ce que** l'éclairage émis par le dispositif d'éclairage (8) est modifié automatiquement en fonction de la reconnaissance d'un objet (15).

11. Procédé selon la revendication 9 ou 10, **caractérisé en ce que** l'éclairage émis par la source lumineuse (8a, 8b) est atténué.

12. Procédé selon l'une des revendications 9 à 11, **caractérisé en ce que** l'éclairage émis par la source lumineuse (8a, 8b) est éteint.

13. Procédé selon l'une des revendications 9 à 12, **caractérisé en ce que** la source lumineuse (8a, 8b) est tournée dans une direction s'écartant de la direction de déplacement.

14. Procédé selon l'une des revendications 9 à 13, **caractérisé en ce que** le dispositif d'éclairage (8) comporte un capot (16) et **en ce que** la source lumineuse (8a, 8b) est au moins partiellement recouverte par le capot (16).

15. Procédé selon l'une des revendications 9 à 14, **caractérisé en ce qu'**une caméra (13) et/ou un dispositif de détection (14) du système de reconnaissance d'objet détecte l'objet (15) et **en ce que**, lors de la reconnaissance de l'objet (15), un signal et envoyé en fonction de la taille de l'objet, dans lequel un ordinateur reçoit et traite le signal et transmet le signal traité au dispositif d'éclairage (8) pour éteindre ou atténuer automatiquement l'éclairage émis par le dispositif d'éclairage (8).
